# EUROPÄISCHE PATENTSCHRIFT

(11) **EP 0 411 070 B1**
(45) Veröffentlichungstag und Bekanntmachung des Hinweises auf die Patenterteilung: **27.07.1994**
(21) Anmeldenummer: 90900759.3
(22) Anmeldetag: 14.12.1989
(51) Int. Cl.: G02B 21/00

(54) **SPEKTRALMIKROSKOP MIT EINEM PHOTOMETER**
SPECTROMICROSCOPE WITH PHOTOMETER
SPECTROMICROSCOPE A PHOTOMETRE

(30) Priorität: 24.12.1988 DE 3843876
(43) Veröffentlichungstag der Anmeldung: 06.02.1991
(73) Patentinhaber: Leica Industrieverwaltung GmbH, D-35530 Wetzlar (DE)
(72) Erfinder: NEUMANN, Burkhard, D-6330 Wetzlar 1 (DE)
(86) Internationale Anmeldenummer: DE8900772
(87) Internationale Veröffentlichungsnummer: WO9007723

(56) Entgegenhaltungen:
- DE-A- 2 421 185
- DE-A- 2 542 731
- DE-A- 3 432 252
- US-A- 4 818 110

## Beschreibung

Die Erfindung betrifft ein Mikroskop gemäß dem Oberbegriff des Anspruchs 1.

Mikroskope mit einem Photometer sowie einem Monochromator (Mikrospektralphotometer) dienen zur Ermittlung der spektralen Verteilung einer Strahlung. Dabei wird das zu untersuchende Objekt mit einer Lichtquelle beleuchtet und die vom Objekt veränderte Strahlung gemessen. Ein derartiges Mikrospektralphotometer ist aus der DE-OS 25 42 731 bekannt. In dieser Druckschrift wird ein Mikroskop mit separaten nachrüstbaren Zusatzeinrichtungen beschrieben, die wahlweise an das Mikroskop ankoppelbar sind. Eine dieser Zusatzeinrichtungen weist einen Gittermonochromator mit einem Eintrittsspalt, einem Hohlspiegel sowie einem optischen Gitter auf. Das Photometer ist in einer Zusatzeinrichtung angeordnet und über einen weiteren nachrüstbaren Zusatz mit dem Monochromator verbunden. Durch Auswechselung des Gitters gegen einen Planspiegel läßt sich dieses Mikroskop sowohl als Spektralphotometer als auch als reines Photometer verwenden. Die hier beschriebene Einrichtung ist durch den hohen Justageaufwand zwischen den nachrüstbaren Bau- bzw. Funktionseinheiten sehr aufwendig. Ferner ist es mit einer derartigen Einrichtung nicht möglich, einen vorwählbaren Objektpunkt gleichzeitig densitometrisch sowie spektralphotometrisch zu vermessen.

Aus der DE-OS 34 32 252 ist ein Meßmikroskop bekannt, das eine aufsetzbare Baueinheit zur densitometrischen und spektralphotometrischen Messung des vom Objekt kommenden Lichtes aufweist. Dazu ist in der Baueinheit ein optischer Spalt in einer Zwischenbildebene des Objektes vorgesehen. Diesem ist ein teildurchlässiger Spiegel nachgeordnet, um zwei getrennte Strahlengänge zu erzeugen. Einer dieser Strahlengänge beinhaltet ein Photometer mit Fotomultiplier zum Empfang des Lichtes der 0. Beugungsordnung, während im anderen Strahlengang ein konkaves Reflexionsgitter sowie eine Diodenzeile zur spektralphotometrischen Messung und Empfang des Lichtes der 1. Beugungsordnung angeordnet sind. Neben der aufwendigen Konstruktion kann mit diesem Meßmikroskop nur in der optischen Achse gemessen werden, so daß die Objektmeßfläche nur durch eine Verschiebung des Objektes mit einem Scanningtisch erfolgen kann. Außerdem ist es hier nicht möglich, das Spaltbild sowie die zugehörigen Spektrallinien im Okular sichtbar zu machen.

Es ist daher Aufgabe der vorliegenden Erfindung, ein gattungsgemäßes Mikroskop im Hinblick auf Justierprobleme bei der Verwendung von unterschiedlichen Gittern zu verbessern.

Diese Aufgabe wird erfindungsgemäß durch die kennzeichnenden Merkmale des Anspruchs 1 gelöst. Weitere vorteilhafte Weiterbildungen sind Gegenstand der Unteransprüche.

Diese Aufgabe wird erfindungsgemäß durch die kennzeichnenden Merkmale des Anspruchs 1 gelöst. Weitere vorteilhafte Weiterbildungen sind Gegenstand der Unteransprüche.

Mit dieser Einrichtung lassen sich insbesondere durch die Verwendung eines Flächensensors die Beugungsbilder der nullten und ersten Beugungsordnung gleichzeitig erfassen. In Abhängigkeit vom Eintrittsspalt des Monochromators kann jedem Objektpunkt ein Spektrum sowie eine photometrisch ermittelte lichttechnische Größe zugeordnet werden. Somit werden beispielsweise Strukturen eines Objektes mit dem Photometer auf ihre Breite und gleichzeitig aus dem Spektrum die Höhe der jeweiligen Objektstruktur ermittelt. Jeder Objektpunkt kann daher gleichzeitig zwei erfaßbare Informationen (Fläche und Höhe) beinhalten.

Wird am Mikroskop ein Scanningtisch verwendet, so lassen sich außerdem zeitaufgelöste Spektralmessungen bzw. zeitaufgelöste densitometrische Messungen durchführen. Somit sind beispielsweise auch Lumineszenz-Abklingzeiten eines einmal angeregten Teilchens automatisch ermittelbar.

Durch den äußerst einfachen Aufbau lassen sich bereits vorhandene Mikroskope nachrüsten, wobei ohne umständlichen Umbau ein derartiges Meßmikroskop wieder für herkömmliche Beobachtungen genutzt werden kann.

Die Erfindung wird nachfolgend anhand von schematisch dargestellten Ausführungsbeispielen näher erläutert. Es zeigen:
- Fig. 1:: die Strahlengänge eines Mikroskops,
- Fig. 2a:: einen optischen Keil mit daran angeordnetem optischen Transmissionsgitter,
- Fig. 2b:: einen optischen Keil mit daran angeordnetem optischen Transmissionsgitter,
- Fig. 3:: einen Beleuchtungsstrahlengang in Auflichtbeleuchtung,
- Fig. 4:: ein Filterrad mit Keil und optischem Transmissionsgitter,
- Fig. 5:: der optische Keil mit zugeordnetem Drehprisma,
- Fig. 6:: einen zwischen zwei konjugierten Leuchtfeldblendenebenen angeordneten Bildleiter.

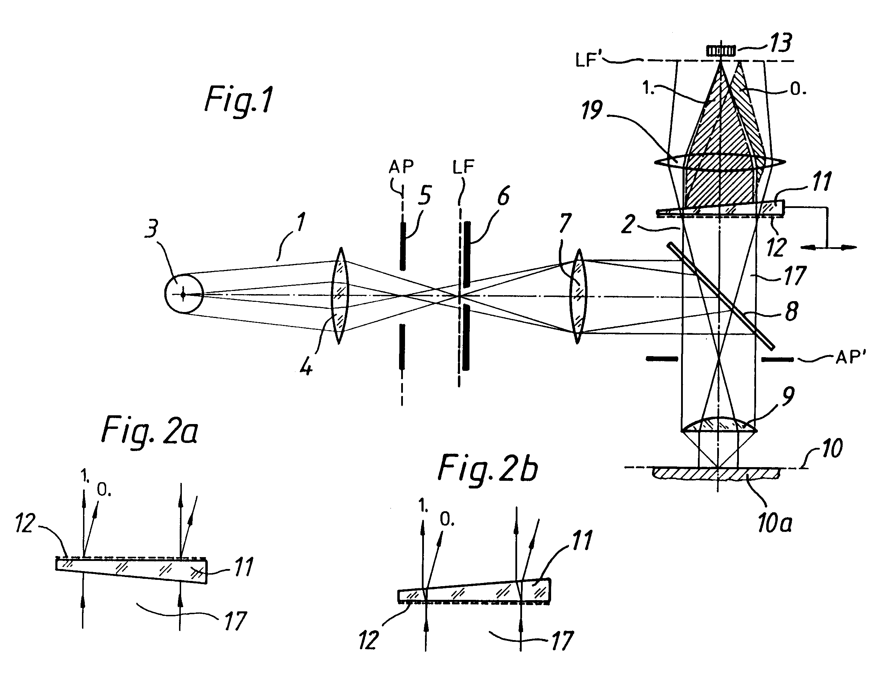

Die Fig. 1 zeigt einen Beleuchtungsstrahlengang 1 sowie einen senkrecht dazu angeordneten Beobachtungs/Meßstrahlengang 2 eines nicht näher dargestellten Mikroskops. Der Beleuchtungsstrahlengang 1 weist ausgehend von einer Lichtquelle 3 eine Kollektorlinse 4 sowie eine Aperturblendenebene AP auf, in der eine regelbare Blende 5 angeordnet ist. Im weiteren Verlauf des Beleuchtungsstrahlengangs 1 ist eine Leuchtfeldblendenebene LF mit einem darin angeordneten regelbaren optischen Eintrittsspalt 6 sowie ein Linsensystem 7 vorgesehen. Mittels eines nachgeordneten Teilerspiegels 8 wird das Beleuchtungslicht der Lichtquelle 3 in den Beobachtungs/Meßstrahlengang 2 eingespiegelt und über die Objektivapertur AP' und das Objektiv 9 auf dem Objekt 10a abgebildet. Das Objektiv 9 ist ein nach unendlich abbildendes System, so daß ein Teil des Beobachtungs/Meßstrahlengangs 2 als Unendlich-Strahlengang 17 ausgebildet ist. In diesem sind dem Teilerspiegel 8 ein optischer Keil 11, ein optisches Transmissionsgitter 12 sowie eine Tubuslinse 19 nachgeordnet. Mittels der Tubuslinse 19 wird ein Bild des Objekts 10a in der Zwischenbildebene LF' erzeugt. In dieser Ebene LF' ist ein Sensor 13 angeordnet. Ein Mikroskopokular ist in der Fig. 1 nicht mit dargestellt. Eine Betrachtung des Objekts kann jedoch über einen dem Sensor 13 nachgeordneten Monitor erfolgen. Außerdem kann ein weiterer Teilerspiegel im Beobachtungs/Meßstrahlengang 2 vorgesehen sein, der einen Teil des Lichts aus der Objektebene 10 in ein Okular ausspiegelt (nicht mit dargestellt).

Der hier dargestellte Beleuchtungsstrahlengang 1 weist eine Köhler'sche Beleuchtung auf, da mittels der Kollektorlinse 4 die Lichtquelle 3 in die Aperturblendenebene AP, die Aperturblende 5 über das Linsensystem 7 sowie über das Objektiv 9 nach unendlich und die Leuchtfeldblende (Eintrittsspalt 6) mit dem Objektiv 9 in die Objektebene 10 abgebildet wird.

Der optische Eintrittsspalt 6 und das optische Transmissionsgitter 12 bilden einen Monochromator. Der Winkel zwischen den Beugungsbildern der nullten und ersten Ordnung wird durch den optischen Keil 11 exakt kompensiert und die Beugungsbilder in der Zwischenbildebene LF' voneinander getrennt abgebildet. Dabei enthält das Beugungsbild der ersten Ordnung einzelne Spektrallinien und das Bild der nullten Ordnung das Spaltbild. Durch die räumliche Trennung der beiden Bilder können aus dem Bild der ersten Ordnung das Spektrum und aus dem Bild der nullten Ordnung die jeweilige Dichteverteilung gleichzeitig erfaßt werden.

Die Fig. 2a und 2b zeigen Varianten in der Ausführung des optischen Keils 11 und des optischen Transmissionsgitters 12. Dabei können beide als einstückiges Bauteil ausgebildet sein. In der Fig. 2a wird das aus der Objektebene 10 auftreffende Licht zunächst um den Winkel zwischen der 0. und 1. Ordnung gebeugt. Danach erfolgt die spektrale Aufspaltung des Lichtes am Transmissionsgitter 12. In der Fig. 2b erfolgt zunächst die spektrale Aufspaltung und mit dem optischen Keil 11 die Verschiebung des Spektrums um den Beugungswinkel.

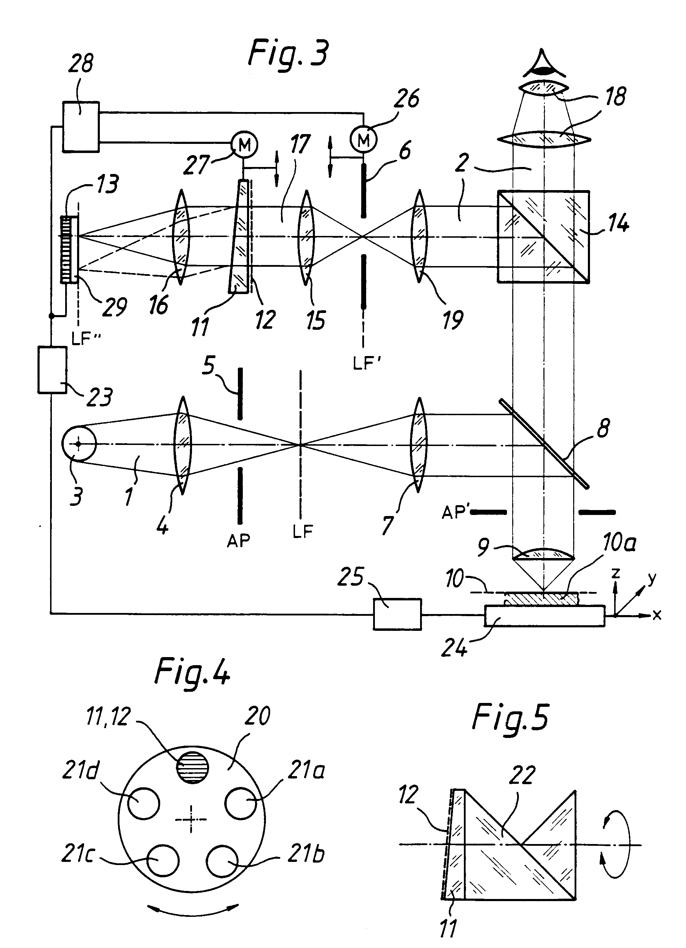

Die Fig. 3 zeigt eine Variante in der Anordnung des aus Spalt 6 und Transmissionsgitter 12 bestehenden Monochromators. Beide sind in einem separaten Strahlengang angeordnet, so daß die Betrachtung des Objekts 10a über das Okular 18, wie schon zur Fig. 1 ausgeführt, erhalten bleibt. Der hier dargestellte Beleuchtungsstrahlengang 1 weist, analog zur Fig. 1, eine Lichtquelle 3, eine Kollektorlinse 4, eine Aperturblende 5, eine Leuchtfeldblendenebene LF und ein Linsensystem 7 auf. Über den Teilerspiegel 8 wird die Leuchtfeldblendenebene LF durch die hier nicht näher ausgeführte Köhler'sche Beleuchtung über das Objektiv 9 in die Objektebene 10 abgebildet. Im Gegensatz zu dem Ausführungsbeispiel nach Fig. 1 weist der Beobachtungs/Meßstrahlengang 2 einen zusätzlichen Teilerspiegel 14 auf, der einen Teil des aus der Objektebene 10 kommenden Lichtes auspiegelt. Über die Tubuslinse 19 wird ein Zwischenbild des Objekts 10a bzw. ein Zwischenbild der Leuchtfeldblendenebene LF erzeugt. In dieser Ebene LF' ist der optische Eintrittsspalt 6 angeordnet. Über ein nachgeordnetes Linsensystem 15,16 wird ein Bild der Zwischenbildebene LF' in einer weiteren Ebene LF'' erzeugt. In dieser Ebene LF'' ist der Flächensensor 13 vorgesehen. Das Linsensystem 15,16 ist derart ausgebildet, daß zwischen den Linsen ein zumindest angenähert paralleler Strahlenverlauf besteht. In diesem Unendlich-Strahlengang 17 ist das Transmissionsgitter 12 mit dem optischen Keil 11 vorgesehen. Dem optischen Spalt 6 des Monochromators ist ein motorisches Stellmittel 26 zugeordnet. Über dieses Stellmittel 26 kann sowohl die Höhe als auch die Breite des Spalts 6 verändert werden. Ferner ist dem Transmissionsgitter 12 sowie dem optischen Keil 11 ein weiteres motorisches Stellmittel 27 zugeordnet. Dieses dient zum exakten Ein/Ausbringen des kombinierten Keil-Transmissionsgitters 11,12 aus dem Beobachtungs/Meßstrahlengang 2 bzw. Unendlich-Strahlengang 17. Beide Stellmittel 26,27 sind elektrisch mit einer Steuereinrichtung 28 verbunden, die wiederum an eine kombinierte Rechen/Auswerteschaltung 23 angeschlossen ist. Dem hier dargestellten Flächensensor 13 ist ein Bildverstärker 29 zugeordnet. Beide sind mit der Rechen/Auswerteschaltung 23 elektrisch verbunden. Außerdem weist das nicht näher dargestellte Mikroskop einen in x-, y- und z-Richtung verstellbaren Scanningtisch 24 auf. Zur Ansteuerung des Tisches 24 ist eine weitere Steuereinrichtung 25 vorgesehen, die elektrisch an die kombinierte Rechen/Auswerteschaltung 23 angeschlossen ist.

Die Vorteile des in der Fig. 3 gezeigten Ausführungsbeispiels liegen u.a. darin, daß die herkömmlichen Betrachtungsmethoden über ein Okular 18 erhalten bleiben und gleichzeitig spektrale und/oder densitometrische Messungen vorgenommen werden können. Außerdem ist es anhand dieses Strahlengangs erkennbar, daß der Monochromator in einfacher Weise als nachrüstbares Bauteil an einem bereits vorhandenen Mikroskop verwendet werden kann. Selbstverständlich kann der Eintrittsspalt 6 mit seinem Stellmittel 26 auch in der Leuchtfeldblendenebene LF angeordnet sein.

Die Fig. 4 zeigt eine Variante in der Ausführungsform des kombinierten optischen Keils 11 dem mit Transmissionsgitter 12. Beide Bauteile sind hier auf einem drehbar angeordneten Filterrevolver 20 (vgl. Doppelpfeil) vorgesehen, wobei zur schnellen Umschaltung auf andere mikroskopische Verfahren weitere Filter 21a bis 21c vorgesehen sind. Zweckmäßigerweise ist einer der vorhandenen Plätze als freier Lichtdurchgang 21d ausgebildet. Selbstverständlich ist es auch möglich, die einzelnen Plätze 21a - 21d mit unterschiedlichen Transmissionsgittern 12 zu belegen. Dabei können sowohl verschiedene Gitterkonstanten als auch Transmissionsgitter mit unterschiedlicher Gitterausrichtung und Gitterform verwendet werden. Ferner kann eine derartige Wechseleinrichtung 20 mit dem verstellbaren optischen Eintrittsspalt 6 gekoppelt sein, so daß dieser bei klassischen Mikroskopierverfahren automatisch aus dem Strahlengang ausgeschwenkt wird.

Die Fig. 5 zeigt eine weitere Variante des optischen Keils 11 mit dem optischen Transmissionsgitter 12. Beiden optischen Bauteilen ist hier ein Prisma 22 zugeordnet. Dies kann drehbeweglich (vgl. Doppelpfeil) im Unendlich-Strahlengang 17 angeordnet sein. Damit kann das Spektrum (Beugungsbild der 1. Ordnung) auf dem Sensor 13 genau ausgerichtet werden. Mit dieser Anordnung können unterschiedlich ausgerichtete Transmissionsgitter mit gleicher Gitterkonstante ersetzt werden.

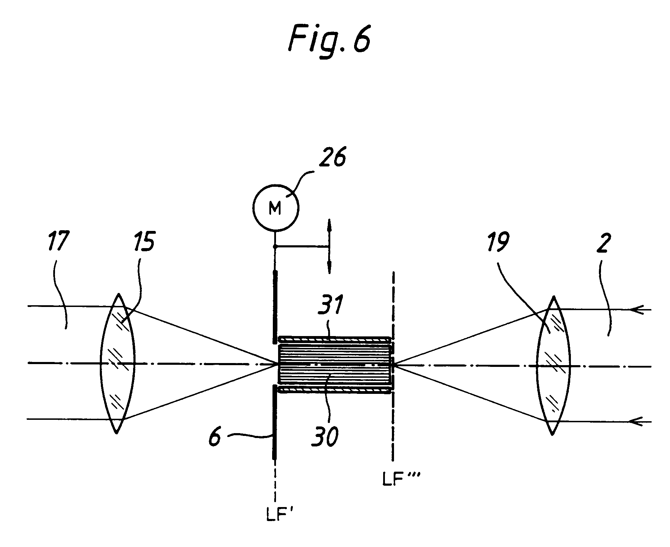

Die Fig. 6 zeigt einen Ausschnitt aus der Fig. 3. Zwischen den Linsen 15 und 19 ist ein Bildleiter 30 vorgesehen, der exakt zwischen den zur Leuchtfeldblendenebene LF konjugierten Ebenen LF''' und LF' angeordnet ist. Zur mechanischen Stabilisierung weist der Bildleiter 30 eine als Schutzrohr ausgebildete Ummantelung 31 auf.

Der Leiter 30 dient der Bildübertragung über größere Strecken und weist exakt zueinander positionierte Lichtleitfasern auf. Es ist jedoch auch möglich, die Lichtleitfasern im Innern des Bildleiters 30 verdrillt anzuordnen, um so das ganze Bild an der Lichtaustrittsfläche LF' um einen bestimmten Winkel (z.B. 90^{o} oder 180^{o}) zu drehen. Die Reihenfolge bzw. Lage der Einzelfasern zueinander muß selbstverständlich von der Lichteintrittsfläche LF''' zur Lichtaustrittsfläche LF'in unveränderter Form bestehen bleiben. Außerdem kann die Lichteintrittsfläche LF''' und/oder die Lichtaustrittsfläche LF' des Bildleiters 30 bereits als Spaltblende 6 ausgebildet sein.

Durch die realisierte Köhler'sche Beleuchtung läßt sich ein Spaltbild auf dem Objekt 10a bzw. in die Objektebene 10 abbilden (Fig. 1) oder aber auch ein Spaltbild aus dem Beobachtungs/Meßstrahlengang 2 ausblenden (Fig. 3). Diesem Spaltbild ist ein optisches Transmissionsgitter 12 nachgeordnet, welches immer in einem zumindest angenähert parallelen Strahlengang 17 vorgesehen ist. Die dadurch bedingte spektrale Aufspaltung des Lichtes wird mit weiteren nachgeordneten Linsen (19, Fig. 1; 16, Fig. 3) in einer weiteren zur Objektebene 10 konjugierten Ebene LF' ; LF'' abgebildet. Dabei trägt das Beugungsbild der nullten Ordnung die densitometrische Information und das Bild der ersten Ordnung die spektrale Information. Die densitometrische Messung kann zur Bestimmung der Strukturbreiten herangezogen werden. Gleichzeitig kann aus dem Spektrum die jeweilige Höheninformation gewonnen werden, da zu jedem Punkt innerhalb des Spaltes 6 ein Spektrum erzeugt wird. Zur Ermittlung der Höhen- und Breiteninformation ist es jedoch notwendig, daß in einem einmal vorgenommenen Eichvorgang sämtliche Höhen mit ihren jeweiligen Spektren erfaßt worden sind.

Um ortsaufgelöste Spektren und densitometrische Meßwerte gleichzeitig zu bestimmen, ist es notwendig, den Sensor als CCD-Flächenarray auszubilden. Zur Spektralanalyse muß der Sensor eine polychrome Empfangscharakteristik aufweisen. Denkbar sind jedoch auch einzelne Diodenzeilen, eine Videokamera oder auch eine Kombination aus einem Bildverstärker mit einer Kamera.

Bei Messungen von statischen Objektpunkten ist es auch möglich, das Transmissionsgitter 12 und den Keil 11 oder nur den Keil 13 aus dem Beobachtungs/Meßstrahlengang 2 zu entfernen, um dadurch die densitometrische und spektralphotometrische Messung nacheinander vorzunehmen. Dies wird insbesondere dadurch ermöglicht, daß der Keil 11 den Beugungswinkel zwischen nullter und erster Ordnung exakt kompensiert.

Die Empfindlichkeit und Auflösung der beschriebenen Meßanordnung sind Funktionen des Transmissionsgitters, des Sensors und der im Mikroskop gegebenen Brennweiten. Durch Veränderung der genannten Parameter lassen sich selbstverständlich die Bedingungen für spezielle Anwendungen variieren. Die beschriebene Anordnung kann nicht nur im Durchlicht, sondern auch bei allen weiteren Beleuchtungsarten verwendet werden. Somit sind beispielsweise auch Lumineszenzabklingzeiten eines einmal angeregten Teilchens bzw. eine zeitaufgelöste Spektroskopie möglich. Dies würde lediglich voraussetzen, daß neben den üblichen Fluoreszenzfiltern zusätzlich ein Scanningtisch 24 bzw. ein Teilchen-Flow verwendet wird. Mit dem Scanningtisch 24 oder dem Teilchen-Flow kann das mit Fluoreszenzbeleuchtung angeregte Teilchen konstant bewegt werden. Dadurch lassen sich die jeweiligen Spektren nacheinander messen, den Verschiebewegen zuordnen und die jeweiligen Fluoreszenzabklingzeiten ermitteln.

## Patentansprüche

1. Mikroskop mit einer Beleuchtungseinrichtung, mit einem Eintrittsspalt (6) in einer zu der Objektebene (10) konjugierten Ebene (LF; LF'; LF'') und mit einem Gittermonochromator, sowie mit einer Sensoranordnung (13), welche in nullter Beugungsordnung die Intensitätsverteilung und in höherer Beugungsordnung das Spektrum des von dem Spalt (6) erzeugten Lichtstreifens registriert, dadurch gekennzeichnet, daß die Optik (9;15) des Mikroskops das vom Objekt (10a) kommende Licht parallel ausrichtet und in diesem Parallel-Lichtbündel (17) ein optisches Transmissions-Beugungsgitter (12) angeordnet ist, dem Gitter (12) ein in das Parallel-Lichtbündel (17) ein- und ausschiebbares Keilprisma (11) zugeordnet ist und das Keilprisma (11) im eingeschobenen Zustand den Beugungswinkel zwischen der nullten und einer höheren Beugungsordnung kompensiert.

2. Mikroskop nach Anspruch 1, **dadurch gekennzeichnet**, daß der Sensor (13) als CCD-Flächenarray ausgebildet ist.

3. Mikroskop nach Anspruch 1, **dadurch gekennzeichnet**, daß der Sensor (13) als Diodenzeile ausgebildet ist.

4. Mikroskop nach Anspruch 1 bis Anspruch 3, **dadurch gekennzeichnet,** daß dem Sensor (13) ein Bildverstärker (29) zugeordnet ist.

5. Mikroskop nach Anspruch 1 bis Anspruch 4, **dadurch gekennzeichnet**, daß der Sensor (13) eine polychrome Empfangscharakteristik aufweist.

6. Mikroskop nach Anspruch 1 bis Anspruch 5, **dadurch gekennzeichnet,** daß dem Sensor (13) eine kombinierte Rechen/Auswerteeinrichtung (23) zugeordnet ist.

7. Mikroskop mindestens einem der vorherigen Ansprüche, **dadurch gekennzeichnet**, daß dem Gitter (12) und dem Keil (11) ein drehbar angeordnetes Prisma (22) zugeordnet ist.

8. Mikroskop nach mindestens einem der vorherigen Ansprüche, **dadurch gekennzeichnet**, daß im Unendlich-Stahlengang (17) eine als Revolver (20) ausgebildete Filterwechseleinrichtung angeordnet ist und diese mindestens ein Gitter (12) aufweist.

9. Mikroskop nach Anspruch 8, **dadurch gekennzeichnet**, daß der Revolver (20) mehrere Gitter (12) mit unterschiedlichen Gitterkonstanten und/oder unterschiedlichen Gitterausrichtungen aufweist.

10. Mikroskop nach Anspruch 6, **dadurch gekennzeichnet**, daß die kombinierte Rechen/Auswerteeinrichtung (23) zum gleichzeitigen Empfang und zur Auswertung mehrerer Beugungsbilder ausgebildet und mit dem Sensor (13) elektrisch verbunden ist.

11. Mikroskop nach mindestens einem der vorherigen Ansprüche, **dadurch gekennzeichnet**, daß der Sensor (13) zum gleichzeitigen Empfang von mehreren Beugungsbildern ausgebildet ist.

12. Mikroskop nach mindestens einem der vorherigen Ansprüche, **dadurch gekennzeichnet**, daß das Mikroskop einen automatisch steuerbaren Scanningtisch (24) aufweist.

13. Mikroskop nach mindestens einem der vorherigen Ansprüche, **dadurch gekennzeichnet**, daß das Mikroskop ein Teilchen-Flow aufweist.

14. Mikroskop nach Anspruch 12 oder Anspruch 13, **dadurch gekennzeichnet**, daß das Mikroskop eine Fluoreszenzeinheit aufweist.

15. Mikroskop nach Anspruch 12, **dadurch gekennzeichnet**, daß der Rechen/Auswerteeinrichtung (23) eine Steuereinrichtung (25) zugeordnet ist und diese mit dem Scanningtisch (24) oder dem Teilchen-Flow elektrisch verbunden ist.

16. Mikroskop nach mindestens einem der vorherigen Ansprüche, **dadurch gekennzeichnet**, daß dem optischen Spalt (6) ein Stellmittel (26) zur Veränderung der Spaltbreite und Spalthöhe zugeordnet ist.

17. Mikroskop nach mindestens einem der vorhergehenden Ansprüche, **dadurch gekennzeichnet,** daß dem Gitter (12) und/oder dem Keil (11) ein Stellmittel (27) zum Ein/Ausbringen in bzw. aus dem Unendlich-Strahlengang (17) zugeordnet ist.

18. Mikroskop nach Anspruch 16 bis 17, **dadurch gekennzeichnet,** daß diese Stellmittel (26;27) elektrisch mit einer Steuereinrichtung (28) verbunden sind.

19. Mikroskop nach mindestens einem der vorherigen Ansprüche, **dadurch gekennzeichnet**, daß der Monochromator (6;11) und der Sensor (13) in einem separaten Gehäuse angeordnet sind.

20. Mikroskop nach Anspruch 19, **dadurch gekennzeichnet**, daß das Gehäuse als nachrüstbare Baueinheit ausgebildet und über an sich bekannte Koppelelemente mit dem Mikroskop verbunden ist.

21. Mikroskop nach mindestens einem der vorherigen Ansprüche, **dadurch gekennzeichnet**, daß gleichzeitig mehrere orts- und flächenveränderliche optische Spalte (6) vorgesehen sind.

22. Mikroskop nach mindestens einem der vorherigen Ansprüche, **dadurch gekennzeichnet,** daß zwischen zwei konjugierten Ebenen der Leuchtfeldblende (LF',LF''') ein Bildleiter (30) angeordnet ist.

23. Mikroskop nach Anspruch 22, **dadurch gekennzeichnet,** daß der Bildleiter (30) in seinem Innern vom Lichteintritt (LF''') bis zum Lichtaustritt (LF') exakt ausgerichtete Lichtleitfasern aufweist.

24. Mikroskop nach den Ansprüchen 22 bis 23, **dadurch gekennzeichnet,** daß die Lichteintrittsfläche (LF''') und/oder die Lichtaustrittsfläche (LF') des Bildleiters (30) als Spalt ausgebildet ist (sind).

25. Mikroskop nach den Ansprüchen 22 bis 24, **dadurch gekennzeichnet,** daß der Bildleiter (30) zur mechanischen Stabilisierung eine Ummantelung (31) aufweist.

## Claims

1. Microscope with an illuminating equipment, with an entrance slit (6) in a plane (LF; LF'; LF'') conjugate with the object plane (10) and with a grating monochromator as well as with a sensor arrangement (13), which registers the intensity distribution of the light beam produced by the slit (6) in zero order of diffraction and the spectrum of that beam in higher order of diffraction, characterised thereby, that the optical system (9; 15) of the microscope aligns the light coming from the object (10a) to be parallel and an optical transmission diffraction grating (12) is arranged in this parallel light beam (17), a wedge prism (11), which is insertable into and extractable from the parallel light beam (17), is associated with the grating (12) and the wedge prism (11) in the inserted state compensates for the diffraction angle between the zero and a higher order of diffraction.

2. Microscope according to claim 1, characterised thereby, that the sensor (13) is constructed as areal charge-coupled device array.

3. Microscope according to claim 1, characterised thereby, that the sensor (13) is constructed diode line.

4. Microscope according to claim 1 to claim 3, characterised thereby, that an image amplifier (29) is associated with the sensor (13).

5. Microscope according to claim 1 to claim 4, characterised thereby, that the sensor (13) displays a polychromatic reception characteristic.

6. Microscope according to claim 1 to claim 5, characterised thereby, that a combined computing/evaluating equipment (23) is associated with the sensor (13).

7. Microscope according to at least one of the preceding claims, characterised thereby, that a prism (22), which is arranged to be rotatable, is associated with the grating (12) and the wedge (11).

8. Microscope according to at least one of the preceding claims, characterised thereby, that a filter-changing equipment, which is constructed as a turret (20) and displays at least one grating (12), is arranged in the infinity ray path (17).

9. Microscope according to claim 8, characterised thereby, that the turret (20) displays several gratings (12) with different grating constants and/or different grating orientations.

10. Microscope according to claim 6, characterised thereby, that the combined computing/evaluating equipment (23) is constructed for the simultaneous reception and for the evaluation of several diffraction images and electrically connected with the sensor (13).

11. Microscope according to at least one of the preceding claims, characterised thereby, that the sensor (13) is constructed for the simultaneous reception of several diffraction images.

12. Microscope according to at least one of the preceding claims, characterised thereby, that the microscope displays an automatically controllable scanning table (24).

13. Microscope according to at least one of the preceding claims, characterised thereby, that the microscope displays a particle flow.

14. Microscope according to claim 12 or claim 13, characterised thereby, that the microscope displays a fluorescence unit.

15. Microscope according to claim 12, characterised thereby, that a control equipment (25) is associated with the combined computing/evaluating equipment (23) and electrically connected with the scanning table (24) or the particle flow.

16. Microscope according to at least one of the preceding claims, characterised thereby, that a setting means (26) for variation of the width and the height of the slit is associated with the optical slit (6).

17. Microscope according to at least one of the preceding claims, characterised thereby, that a setting means (27) for the insertion into or extraction from the infinity ray path (17) is associated with the grating (12) and/or the wedge (11).

18. Microscope according to claim 16 and 17, characterised thereby, that these setting means (26; 27) are electrically connected with a control equipment (28).

19. Microscope according to at least one of the preceding claims, characterised thereby, that the monochromator (6; 11) and the sensor (13) are arranged in a separate housing.

20. Microscope according to claim 19, characterised thereby, that the housing is constructed as a supplementary constructional unit and connected with the microscope by way of in themselves known coupling elements.

21. Microscope according to at least one of the preceding claims, characterised thereby, that several optical slits (6) of variable location and area are provided at the same time.

22. Microscope according to at least one of the preceding claims, characterised thereby, that an image conductor (30) is arranged between two conjugate planes of the light field stop (LF', LF'').

23. Microscope according to claim 22, characterised thereby, that the image conductor (30) in its interior displays optical conductor fibres oriented exactly from the light entrance (LF''') to the light exit (LF').

24. Microscope according to the claims 22 to 23, characterised thereby, that the light entrance area (LF''') and/or the light exit area (LF') of the image conductor (30) are/is constructed as slit.

25. Microscope according to the claims 22 to 24, characterised thereby, that the image conductor (30) displays a sheathing (31) for mechanical rigidification.

## Revendications

1. Microscope à dispositif d'éclairage, comprenant une fente d'entrée (6) dans un plan (LF ; LF' ; LF'') conjugués au plan d'objet (10) et un monochromateur à grille, ainsi qu'un dispositif détecteur (13) qui, dans un ordre de diffraction zéro enregistre la répartition d'intensité et, dans un ordre de diffraction supérieur, la bande de lumière produite par la fente 6, caractérisé en ce que l'optique (9 ; 15) du microscope oriente la lumière provenant de l'objet (10a) pour qu'elle soit parallèle et qu'une grille de diffraction (12) de transmission optique est disposé dans ce faisceau de lumière parallèle (17), qu'un prisme en forme de coin (11) susceptible d'être déplacé dans et hors du faisceau de lumière parallèle (17) est associé à la grille et que le prisme en forme de coin (11), à l'état placé dans le faisceau compense l'angle de diffraction entre l'ordre de diffraction zéro et un ordre de diffraction supérieur.

2. Microscope selon la revendication 1, caractérisé en ce que le dispositif détecteur (13) est réalisé sous forme d'un motif de surface à CCD.

3. Microscope selon la revendication 1, caractérisé en ce que le dispositif détecteur (13) est réalisé sous forme d'une rangée de diodes.

4. Microscope selon l'une des revendications 1 à 3, caractérisé en ce qu'un amplificateur d'image (29) est associé au dispositif détecteur (13).

5. Microscope selon l'une des revendications 1 à 4, caractérisé en ce que le dispositif détecteur (13) présente une caractéristique de réception polychrome.

6. Microscope selon l'une des revendications 1 à 5, caractérisé en ce qu'un dispositif de calcul/exploitation (23) combiné est associé au dispositif détecteur (13).

7. Microscope selon l'une des revendications précédentes, caractérisé en ce qu'un prisme monté rotatif (22) est associé à la grille (12) et au coin (11).

8. Microscope selon l'une des revendications précédentes, caractérisé en ce qu'un dispositif de changement de filtre réalisé sous forme d'un dispositif à revolver (20) est disposé dans le trajet de faisceau d'infini (17) et comprend au moins une grille (12).

9. Microscope selon la revendication 8, caractérisé en ce que le dispositif à revolver (20) comprend plusieurs grilles (12) ayant des constantes de grille différentes et/ou des orientations de grille différentes.

10. Microscope selon la revendication 6, caractérisé en ce que le dispositif de calcul/exploitation combiné (23) est adapté pour permettre une réception et une exploitation simultanée de plusieurs images de diffraction et est relié électriquement au dispositif détecteur (13).

11. Microscope selon l'une des revendications précédentes, caractérisé en ce que le dispositif détecteur (13) est configuré pour permettre la réception simultanée de plusieurs images de diffraction.

12. Microscope selon l'une des revendications précédentes, caractérisé en ce que le microscope comprend une table de balayage (24) à commande automatique.

13. Microscope selon l'une des revendications précédentes, caractérisé en ce que le microscope présente une fluence de particules.

14. Microscope selon la revendication 12 ou 13, caractérisé en ce que le microscope comprend un dispositif à fluorescence.

15. Microscope selon la revendication 12, caractérisé en ce qu'au dispositif de calcul/exploitation (23) est associé un dispositif de commande (25) et celui-ci est relié électriquement à la table de balayage (24) ou au moyen à fluence de particules.

16. Microscope selon l'une des revendications précédentes, caractérisé en ce qu'un moyen de réglage (26) est associé à la fente optique (6) pour la modification de la largeur de fente et la hauteur de fente.

17. Microscope selon l'une des revendications précédentes, caractérisé en ce qu'à la grille (12) et/ou au coin (11) est associé un moyen de réglage (27) pour l'introduction ou l'évacuation respectivement dans et hors du trajet de faisceau d'infini (17).

18. Microscope selon la revendication 16 à 17, caractérisé en ce que le moyen de réglage (26 ; 27) est relié électriquement à un dispositif de commande (28).

19. Microscope selon l'une des revendications précédentes, caractérisé en ce que le monochromateur (6 ; 11) et le dispositif détecteur (13) sont disposés dans un boîtier séparé.

20. Microscope selon la revendication 19, caractérisé en ce que le boîtier est réalisé sous forme d'une unité adaptable et est relié au microscope par des éléments d'accouplement.

21. Microscope selon l'une des revendications précédentes, caractérisé en ce que plusieurs fentes optiques (6) variables en position et en surface sont prévues simultanément.

22. Microscope selon l'une des revendications précédentes, caractérisé en ce qu'un conducteur de lumière (30) est disposé entre deux plans conjugués du diaphragme de champ de lumière (LF', LF''').

23. Microscope selon la revendication 22, caractérisé en ce que le conducteur d'image (30) comprend dans son intérieur des fibres conducteurs de lumière orientés précisément de l'entrée de lumière (LF''') à la sortie de lumière (LF').

24. Microscope selon la revendication 22 à 23, caractérisé en ce que la surface d'entrée de lumière (LF''') et/ou la surface de sortie de lumière (LF') du conducteur d'image (30) est ou sont réalisés sous forme de fentes.

25. Microscope selon la revendication 22 à 24, caractérisé en ce que le conducteur de lumière (30) comprend un revêtement (31) pour assurer une stabilisation mécanique.
